(19) Europäisches Patentamt
European Patent Office
Office européen des brevets

(11) **EP 2 226 327 A1**

(12) **EUROPEAN PATENT APPLICATION**

(43) Date of publication:
**08.09.2010 Bulletin 2010/36**

(51) Int Cl.:
*C07F 3/00* [(2006.01)]     *C08F 4/00* [(2006.01)]

(21) Application number: **09154070.8**

(22) Date of filing: **02.03.2009**

| | |
|---|---|
| (84) Designated Contracting States:<br>**AT BE BG CH CY CZ DE DK EE ES FI FR GB GR HR HU IE IS IT LI LT LU LV MC MK MT NL NO PL PT RO SE SI SK TR**<br>Designated Extension States:<br>**AL BA RS**<br><br>(71) Applicant: **Borealis AG**<br>**1220 Vienna (AT)** | (72) Inventors:<br>• **Denifl, Peter**<br>  **00990 Helsinki (FI)**<br>• **Leinonen, Timo**<br>  **06750 Tolkkinen (FI)**<br><br>(74) Representative: **Lindinger, Ingrid**<br>**Borealis Polyolefine GmbH**<br>**St.-Peter-Straße 25**<br>**4021 Linz (AT)** |

(54) **Preparation of an olefin polymerization catalyst component**

(57)     Process for preparing a magnesium complex, said process comprises

a) adding a solution of a dialkyl magnesium compound of the formula $R_2Mg$, wherein each one of the two Rs is a similar or different $C_1$-$C_{20}$-alkyl, in a $C_6$-$C_{10}$ aromatic hydrocarbon to a monohydric alcohol of the formula R'OH, wherein R' is a $C_1$-$C_{20}$-alkyl at a temperature of 60 to 90°C and after reaction in step a) is completed

b) adding an aromatic carboxylic acid chloride or diacid dichloride as donor precursor at the same temperature as used in step a) and after reaction in step b) is completed

c) cooling the reaction mixture down to a temperature of 15 to 30°C yielding the magnesium complex as liquid,

and its use in the preparation of procatalysts of the Ziegler-Natta type by emulsion/solidification technology.

**Description**

The present invention relates to an improved process for preparing a magnesium complex, which is for example useful as catalyst component for the preparation of procatalysts of the Ziegler-Natta type by emulsion/solidification technology.

**Background Art**

Ziegler-Natta (ZN) type polyolefin catalysts are well known in the field of polymers. Generally, they comprise (a) at least a procatalyst formed from a transition metal compound of Group 4 to 6 of the Periodic Table (IUPAC, Nomenclature of Inorganic Chemistry, 1989), a metal compound of Group 1 to 3 of the Periodic Table (IUPAC), and, optionally, a compound of group 13 of the Periodic Table (IUPAC) and/or an internal donor compound. ZN catalysts may also comprise (b) further catalyst component(s), such as a cocatalyst and/or an external donor.

Various methods, including the emulsion/solidification technology for preparing ZN procatalysts are known in the state of art.

WO 03/000757 as well as WO 03/000754 describes a process for the preparation of an olefin polymerization procatalyst, enabling to prepare solid particles of a procatalyst comprising a group 2 metal together with a transition metal, using emulsion/solidification technology.

WO 2004/029112 discloses a further process for preparing an olefin polymerization procatalyst using emulsion/ solidification technology, wherein the process is further **characterized in that** a specific aluminium alkyl compound is brought into contact with the procatalyst components, enabling a certain degree of activity increase at higher temperatures.

EP-A-1 862 480 describes also a process for preparing an olefin polymerization procatalyst using emulsion/ solidification technology, wherein the control of catalytic activity is achieved by decreasing the amount of titanium present in the solidified particles of the olefin polymerization procatalyst being present in the oxidation state +4 by adding a reducing agent.

EP-A-1 862 481 describes a process for preparing an olefin polymerization procatalyst using emulsion/solidification technology, wherein the process is further **characterized in that** a specific aluminium alkoxy compound is brought into contact with the procatalyst components, enabling a certain degree of activity increase at higher temperatures.

According to the above identified prior art procatalyst particles having a good morphology, size and uniform particle size distribution can be obtained by the way of preparing Ziegler-Natta (ZN) type catalysts, for use in olefin polymerization, in particular for propylene polymerization.
The produced procatalysts according to the state of the art have excellent morphology, narrow particle size distribution and yield polymerization catalysts having a fully satisfactory activity and allowing the control of the MWD and XS.

All of these processes include as the first step the preparation of a solution of a complex of a Group 2 metal and an electron donor by reacting a compound of said metal with said electron donor or a precursor thereof in an organic liquid reaction medium.

The Group 2 metal used in this step of the prior art processes is preferably magnesium, and the liquid organic medium comprises preferably a $C_6$-$C_{10}$ aromatic hydrocarbon, preferably toluene.
As compound of magnesium an alkoxy magnesium compound is preferably used. Suitable alkoxy magnesium compounds are preferably the reaction product of dialkyl magnesium of the formula $R_2Mg$, wherein each one of the two Rs is a similar or different $C_1$-$C_{20}$-alkyl, preferably a similar or different $C_4$-$C_{10}$-alkyl, with a monohydric alcohol R'OH, wherein R' is a $C_1$-$C_{20}$-alkyl, preferably a $C_2$-$C_{16}$-alkyl group.
Typical magnesium alkyls are butyl ethyl magnesium, dibutyl magnesium, dipropyl magnesium, propyl butyl magnesium, dipentyl magnesium, butyl pentyl magnesium, butyl octyl magnesium and dioctyl magnesium. Most preferably, one R of the formula $R_2Mg$ is a butyl group and the other R is an octyl or ethyl group, i. e. the dialkyl magnesium compound is butyl octyl magnesium (BOMAG) or butyl ethyl magnesium (BEM).
Preferable monohydric alcohols are those of formula R'OH in which R' is a $C_2$-$C_{16}$ alkyl group, more preferably a $C_4$-$C_{12}$ alkyl group, particularly 2-ethyl-1-hexanol.

As electron donor compound preferably a mono- or diester of an aromatic carboxylic acid or diacid, the latter being able to form a chelate-like structured complex, is used. Said aromatic carboxylic acid ester or diester can be formed in situ by reaction of an aromatic carboxylic acid chloride or diacid dichloride precursor with the alkoxy magnesium compound prepared as described above.

As can be seen in the experimental parts of the above identified prior art the dialkyl magnesium compound, preferably BOMAG, as solution in toluene is added to the monohydric alcohol, preferably to 2-ethyl-1-hexanol. The temperature for this step is low, e.g. 35°C or even lower, e.g. 20°C and below. As the reaction between the magnesium compound and the alcohol is an exothermic reaction, the addition can only be done slowly. After the addition is completed, the temperature of the mixture is increased to 60°C and held for some time at this level to ensure complete reaction. At last the donor precursor, preferably 1,2-phthaloyl dichloride, is added at this temperature level.

In bigger scale such an increase in temperature can take several hours, making the magnesium complex preparation in bigger scale altogether very time consuming.

It was therefore an object of the present invention to provide an improved process for preparing a magnesium complex whereby the magnesium complex preparation time is significantly decreased compared to prior art processes. Using such a magnesium complex in the preparation of procatalysts of the Ziegler-Natta type by emulsion/solidification technology should yield a procatalyst with reasonable high activity enabling the production of polyolefins, especially polypropylenes, and preferably allowing also controlling the XS.

**Description of the invention**

In order to solve the above-identified objects, the present invention provides a process as defined in claim 1. Preferred embodiments thereof are described in the dependent subclaims as well as in the following description.

It has surprisingly been found by the inventors that the preparation time of the magnesium complex can be significantly reduced by performing the addition of the magnesium dialkyl compound to the alcohol, preferably 2-ethyl-1-hexanol at higher temperature. Furthermore this measure leads to further advantages during the magnesium complex preparation.

Ziegler-Natta procatalysts prepared by the emulsion/solidification technology using a magnesium complex prepared according to the invention have excellent morphology, good particle size distribution and yield polymerization procatalysts having a fully satisfactory activity and allowing the desired control of XS.

According to the replica effect, the polymer particles produced by using such a procatalyst have very good morphological properties, too.

The term "procatalyst" refers to the solid catalyst particles, prepared by the reaction of the different components (like the complex of a Group 2 metal, the internal electron donor and a compound of a Group 4 metal) using the emulsion/solidification technology.

The terms "catalyst", "Ziegler-Natta catalyst system" or polymerization catalyst" refer to the active catalyst, which has been obtained by activating the procatalyst with a cocatalyst.

The present invention is therefore directed to a process for preparing a magnesium complex, said process comprises

a) adding a solution of a dialkyl magnesium compound of the formula $R_2Mg$, wherein each one of the two Rs is a similar or different $C_1$-$C_{20}$-alkyl, in a $C_6$-$C_{10}$ aromatic hydrocarbon to a monohydric alcohol of the formula R'OH, wherein R' is a $C_1$-$C_{20}$-alkyl at a temperature of 60 to 90°C and after reaction in step a) is completed

b) adding an aromatic carboxylic acid chloride or diacid dichloride as donor precursor at the same temperature as used in step a) and after reaction in step b) is completed

c) cooling the reaction mixture down to a temperature of 15 to 30°C, yielding the magnesium complex as liquid.

In step a) of the process according to the invention a solution of a dialkyl magnesium compound in an aromatic hydrocarbon is added to a monohydric alcohol.

Suitable dialkyl magnesium compounds have the formula $R_2Mg$, wherein each one of the two Rs is a similar or different $C_1$-$C_{20}$-alkyl, preferably a similar or different $C_4$-$C_{10}$-alkyl, like butyl ethyl magnesium, dibutyl magnesium, dipropyl magnesium, propyl butyl magnesium, dipentyl magnesium, butyl pentyl magnesium, butyl octyl magnesium and dioctyl magnesium. More preferably, one R of the formula $R_2Mg$ is a butyl group and the other R is an octyl or ethyl group, i. e. the dialkyl magnesium compound is butyl octyl magnesium (BOMAG) or butyl ethyl magnesium (BEM). Most preferably the dialkyl magnesium compound is butyl octyl magnesium (BOMAG).

The dialkyl magnesium compound is added in the form of a solution in a $C_6$-$C_{10}$ aromatic hydrocarbon, preferably in toluene.

The molar ratio of said aromatic medium to magnesium is preferably less than 10, for instance from 4 to 10, preferably from 5 to 9.

The solution of the dialkyl magnesium compound is added to a monohydric alcohol of the formula R'OH, wherein R' is a $C_1$-$C_{20}$-alkyl, more preferably a $C_4$-$C_{12}$ alkyl group, like hexanol, 2-ethyl-1-butanol, 4-methyl-2-pentanol, 1-heptanol, 2-heptanol, 4-heptanol, 2,4-dimethyl-3-pentanol, 1-octanol, 2-octanol, 2-ethyl-1-hexanol, 1-nonanol, 5-nonanol, diisobutyl carbinol, 1-decanol and 2,7-dimethyl-2-octanol.

Most preferably 2-ethyl-1-hexanol is used as monohydric alcohol.

The molar ratio of said alcohol to magnesium is in the range of alcohol/Mg = 2 to alcohol/Mg = 3, preferably in the range of alcohol/Mg = 2 to alcohol/Mg = 2.4.

According to the invention the addition is performed at a temperature of 60 to 90°C, preferably at 65 to 80°C.

This high temperature already during the addition of the dialkyl magnesium compound solution is in contrast to the temperature used according to the state of the art, where the addition is performed at lower temperatures of below 35°C or even below 20°C.

Due to the inventive measure of higher reaction temperature the removal of the heat of reaction is more effective and thus the dialkyl magnesium compound solution can be added much faster than it is possible with the processes known from the state of the art.

A further advantage of the inventive measure is that the heat of reaction can be used to increase the reaction temperature at the beginning of the dialkyl magnesium compound solution addition, which avoids the additional, time consuming heating step after the addition of the magnesium compound solution necessary according to the prior art.

Because of the higher reaction temperature during the addition step the mixing time for ensuring complete reaction after the addition has been finished can be decreased considerably.

After the reaction has been completed a donor precursor is added to the reaction mixture.

As donor precursor an aromatic carboxylic acid chloride or diacid dichloride, preferably phthaloyl dichloride is used.

The donor itself is formed in situ by reaction of the aromatic carboxylic acid chloride precursor with the Mg-alkoxide formed in step a).

The electron donor is an aromatic carboxylic acid ester, a particularly favoured ester being bis(2-ethyl hexyl)phthalate (also called dioctyl phthalate).

The molar ratio of said precursor to magnesium is in the range of precursor/Mg = 0.1 to precursor/Mg = 0.8, preferably in the range of precursor/Mg = 0.2 to precursor/Mg = 0.6.

The addition of the donor precursor is performed at the same temperature as used for step a), which also simplifies the magnesium complex preparation compared to prior art processes.

In order to complete the reaction the reaction mixture is further mixed for some time.

At last, the reaction mixture is cooled down to a temperature of 15 to 30°C, preferably to 20 to 25°C, more preferably to room temperature, yielding the desired magnesium complex in liquid form, respectively as magnesium complex solution.

The magnesium complex prepared according to the present invention can further be used as catalyst component in the preparation of a Ziegler-Natta type procatalyst by the emulsion/solidification technology.

As stated above the emulsion/solidification technology, developed by Borealis, is known from the prior art and the general principles of such a preparation are for example described in WO 03/000757, WO 03/000754, WO 2004/029112, EP-A-1 862 480 and EP-A-1 862 481.

The patents referred to in this specification are incorporated by reference herein.

In order to prepare Ziegler-Natta procatalysts by emulsion/solidification technology using a magnesium complex prepared according to the invention the following steps are performed:

a) adding said magnesium complex solution prepared as described above to at least one compound of a transition metal to produce an emulsion, wherein the dispersed phase of which is in the form of droplets and contains more than 50 mol% of the magnesium in said complex,

b) agitating the emulsion in order to maintain the droplets of said dispersed phase within a predetermined average size range,

c) solidifying said droplets of the dispersed phase,

d) washing the solidified particles at least once,

e) drying the solidified particles or slurring the solidified particles to an oily liquid without drying and optionally

f) recovering the dried or slurried solidified particles of the olefin polymerization procatalyst.

The compound of a transition metal is preferably a compound of a Group 4 metal. The Group 4 metal is preferably titanium, and its compound to be reacted with said magnesium complex is preferably a halide.

Said magnesium complex is reacted with a compound of at least one four-valent Group 4 metal at a temperature greater than 10°C and less than 60°C to produce an emulsion of a denser, compound of Group 4 metal, preferably $TiCl_4$,/toluene-insoluble, oil dispersed phase having Group 4 metal/Mg mol ratio 0.1 to 10 in an oil disperse phase having Group 4 metal/Mg mol ratio 10 to 100; agitating the emulsion, optionally in the presence of an emulsion stabilizer and/or a turbulence minimizing agent, in order to maintain the droplets of said dispersed phase within an average size range of 5 to 200 $\mu$m. The procatalyst particles are obtained after solidifying said particles of the dispersed phase e.g. by heating.

The said disperse and dispersed phases are thus distinguishable from one another by the fact that the denser oil, if contacted with a solution of titanium tetrachloride in toluene, will not or only to a small degree dissolve in it. A suitable solution for establishing this criterion would be one having a toluene mol ratio of 0.1 to 0.3. They are also distinguishable by the fact that the great preponderance of the Mg provided (as complex) for the reaction with the Group 4 metal compound is present in the dispersed phase, as revealed by comparison of the respective Group 4 metal/Mg mol ratios.

In effect, therefore, virtually the entirety of the reaction product of the Mg complex with the Group 4 metal - which is the precursor of the ultimate catalyst component - becomes the dispersed phase, and proceeds through the further processing steps to the final particulate form. The disperse phase, still containing a useful quantity of Group 4 metal, can be reprocessed for recovery of that metal.

The production of a two-phase, rather than single-phase (as in prior practice) reaction product is encouraged by carrying out the Mg complex/Group 4 metal compound reaction at low temperature, specifically above 10°C but below 60°C, preferably between above 20°C and below 50°C. Since the two phases will naturally tend to separate into a lower, denser phase and supernatant lighter phase, it is necessary to maintain the reaction product as an emulsion by agitation, preferably in the presence of an emulsion stabiliser.

The resulting particles from the dispersed phase of the emulsion are of a size, morphology (spherical shape) and uniformity which render the ultimate procatalyst extremely effective in olefin polymerization. This morphology is preserved during the heating to solidify the particles, and of course throughout the final washing and optional drying steps. It is, by contrast, difficult to the point of impossibility to achieve such morphology through precipitation, because of the fundamental uncontrollability of nucleation and growth, and the large number of variables which affect these events.

Furthermore, emulsifying agents/emulsion stabilisers can be used additionally in a manner known in the art for facilitating the formation and/or stability of the emulsion. For the said purposes e.g. surfactants, e.g. a class based on acrylic or methacrylic polymers can be used. Preferably, said emulsion stabilizers are acrylic or methacrylic polymers, in particular those with medium sized ester side chains having more than 10, preferably more than 12 carbon atoms and preferably less than 30, and preferably 12 to 20 carbon atoms in the ester side chain. Particular preferred are unbranched $C_{12}$ to $C_{20}$-acrylates such as poly(hexadecyl)-methacrylate and poly(octadecyl)methacrylate.

Furthermore, in some embodiments a turbulence minimizing agent (TMA) can be added to the reaction mixture in order to improve the emulsion formation and maintain the emulsion structure. By using said TMA, procatalyst particles can be obtained, said particles having very narrow size distribution.

Reaction mixture here means the solution from the initial organic liquid reaction medium, over the solution of the complex up to the emulsion before solidifying the particles of the dispersed phase of the emulsion.

Preferably, the TMA is added to the reaction mixture when the emulsion is formed, however in any case before solidification of the droplets of the dispersed phase starts in order to make sure that a quite uniform particle size distribution can be obtained.

Said TMA agent has to be inert and soluble in the reaction mixture under the reaction conditions, which means that polymers without polar groups are preferred.

Accordingly, said TMA or mixtures thereof are preferred as polymers having linear aliphatic carbon backbone chains, which might be branched with short side chains only in order to serve for uniform flow conditions when stirring. Said TMA is in particular preferably selected from α-olefin polymers of α-olefin monomers with 6 to 20 carbon atoms, like polyoctene, polynonene, polydecene, polyundecene or polydodecene or mixtures thereof, having the molecular weight and general backbone structure as defined before. Most preferable it is polydecene.

TMA can be added to the emulsion in an amount of e.g. 1 to 1.000 ppm, preferably 5 to 100 ppm and more preferable 5 to 50 ppm, based on the total weight of the reaction mixture.

It has been found that the best results are obtained when the Group 4 metal/Mg mol ratio of the denser oil is 1 to 5, preferably 2 to 4, and that of the disperse phase oil is 55 to 65. Generally the ratio of the mol ratio Group 4 metal/Mg in the disperse phase oil to that in the denser oil is at least 10.

Solidification of the dispersed phase droplets by heating is suitably carried out at a temperature of 70-150°C, usually at 80-110°C, preferably at 90-110°C.

The finally obtained procatalyst is desirably in the form of particles having generally an average size range of 5 to 200 μm, preferably 10 to 100, more preferably 20 to 50 μm.

For isolating the solidified particles the reaction mixture is allowed to settle and the solidified particles are recovered from this reaction mixture for example by syphoning or by an in-stream filtering unit.

The solidified particles are then washed (step d) at least once up to six times, preferably at least twice, most preferably at least three times with a hydrocarbon, which preferably is selected from aromatic and aliphatic hydrocarbons, preferably with toluene, particularly with hot (e.g. 80 to 100°C) toluene, which might include a smaller or higher amount of $TiCl_4$ in it. The amount of $TiCl_4$ can vary from a few Vol% to more than 50 Vol%, such as from 5 Vol% to 50 Vol%, preferably up to 30 Vol% and more preferably from 5 to 15 Vol%. It is also possible that at least one wash is done with 100 Vol% $TiCl_4$. One or several further washes after aromatic and/ or $TiCl_4$ washes can be run with aliphatic hydrocarbons of 4 to 8 carbon atoms. Preferable these latter washings are performed with heptane and/or pentane. Washings can be done with hot (e.g. 90°C) or cold (room temperature) hydrocarbons or combinations thereof. It is also possible that all washings will be done with the same solvent, e.g. toluene.

The washing can be optimized to give a procatalyst with novel and desirable properties. Subsequently, the washed solidified particles are dried or slurried to an oily liquid without drying.

It is preferable that the intermediates as well as the final product of the process be distinct compounds with an essentially stoichiometric composition. Often, they are complexes. A complex is, according to Römpps Chemie-Lexicon, 7. Edition, Franckh'sche Verlagshandlung, W. Keller & Co., Stuttgart, 1973, page 1831, "a derived name of compounds of higher order, which originate from the combination of *molecules,* - unlike compounds of first order, in the creation of which atoms participate".

The compound of a fourvalent Group 4 metal compound containing a halogen is preferably a titanium tetrahalide. Equivalent to titanium tetrahalide is the combination of an alkoxy titanium halide and a halogenation agent therefore, which are able to form a titanium tetrahalide *in situ.* The most preferred halide is the chloride, for zirconium and hafnium as well as for titanium.

The reaction conditions used in the process may be varied according to the used reactants and agents.

As is known, the addition of at least one halogenated hydrocarbon during the process can lead to further improved catalytic activity. Reactive halogenated hydrocarbons preferably have the formula $R'''X'''_n$ wherein $R'''$ is an n-valent $C_1$-$C_{20}$ hydrocarbyl group, particularly a $C_1$-$C_{10}$ paraffin, $X'''$ is a halogen and n is an integer from 1 to 4.

Such chlorinated hydrocarbons include monochloromethane, dichloromethane, trichloromethane (chloroform), tetrachloromethane, monochloroethane, (1,1)-dichioroethane, (1,2)-dichloroethane, (1,1,1)-trichloroethane, (1,1,2)-trichloroethane, (1,1,1,2)-tetrachloroethane, (1,1,2,2) tetrachloroethane, pentachloroethane, hexachloroethane, (1)-chloropropane, (2)-chloropropane, (1,2)-dichloropropane, (1,3)-dichloropropane, (1,2,3)trichloropropane, (1)-chlorobutane, (2)-chlorobutane, isobutyl chloride, tert.butyl chloride, (1,4)-dichlorobutane, (1)-chloropentane, (1,5)-dichloropentane. The chlorinated hydrocarbons may also be unsaturated, provided that the unsaturation does not act as catalyst poison in the final procatalyst.

In the above formula, $R'''$ is preferably a mono-or bivalent $C_1$-$C_{10}$ alkyl group, independently, $X'''$ is preferably chlorine and, independently, n is preferably 1 or 2. Preferred compounds include butyl chloride (BuCl), dichloroalkanes such as (1,4)-dichlorobutane, and tertiary butyl chloride.

In addition, during the procatalyst preparation a reducing agent, which decreases the amount of titanium present in said solidified particles of the olefin polymerization procatalyst being present in the oxidation state +4, can be added. Suitable reducing agents are aluminium alkyl compounds, aluminium alkyl alkoxy compounds as well as magnesium compounds as defined in the present specification.

Suitable aluminium compounds have a general formula $AlR_{3-n}X_n$, wherein R stands for a straight chain or branched alkyl or alkoxy group having 1 to 20, preferably 1 to 10 and more preferably 1 to 6 carbon atoms, X independently represents a residue selected from the group of halogen, preferably chloride, and n stands for 0, 1 or 2, preferably for 1 or 2. At least one of the R residues has to be an alkyl group.

The compound can be added as an optional compound to the procatalyst synthesis and brought into contact with the droplets of the dispersed phase of the agitated emulsion before drying or slurring the solidified particles in step f). I.e. the Al compound can be added at any step a) to c), or during the washing step d), however, before step e). Reference is made to WO 2004/029112, EP-A-1 862 480 and to EP-A-1 862 481.

Illustrative examples of aluminium alkyl and alkoxy compounds to be employed in accordance with the present invention are:

Tri-($C_1$-$C_6$)-alkyl aluminium compounds and chlorinated aluminium alkyl compounds, especially diethyl aluminium chloride;

diethyl aluminium ethoxide, ethyl aluminium diethoxide, diethyl aluminium methoxide, diethyl aluminium propoxide, diethyl aluminium butoxide, dimethyl aluminium ethoxide, of which in particular diethyl aluminium ethoxide is preferred.

Suitable magnesium compounds are magnesium compounds as defined herein in connection with the magnesium complex. The respective disclosure is incorporated herein by reference with respect to the magnesium compound to be added in accordance with the process of the present invention. In particular, suitable magnesium compounds are dialkyl magnesium compounds or halogenated alkyl magnesium compounds of the general formula $MgR_{2-n}X_n$, where each n is 0 or 1, and each R are same or different alkyl groups with 1 to 8 carbon atoms and X is halogen, preferably Cl. One preferred magnesium compound is butyloctyl magnesium (commercially available under the trade name BOMAG), which is already preferably used in the preparation of the Mg complex.

The optional Al or Mg compound is added in such an amount that the final procatalyst particles have Al content of 0,0 to 1 wt-%, preferably 0,1 to 0,8 wt-% or 0,2 to 0,5 wt-%. The preferred amounts depend to some extent on the Al compound, e.g. if an Al alkoxy compound is used, the preferred final Al amounts seem to be lower than if e.g. Al alkyl chloride compounds are used.

Preferably an Al alkyl or Al alkyl alkoxy compound, as defined above, is added.

Furthermore a small amount of a phosphorous compound can be added during the preparation of the procatalyst; preferably to the magnesium complex, the liquid/liquid two-phase system during the procatalyst preparation prior to solidification, or to the washing liquid (step d), but again before step e).

Accordingly, the addition of the phosphorous compound may be effected from step a) until the completion of the particle formation, i.e. step c), or thereafter, for example in a subsequent washing step to be carried out after step c) but prior to step e). The completion of the particle formation is usually achieved when the remaining toluene-soluble components have been washed out from the procatalyst particles during solidifying said particles. Thus, the phosphorous compound can be preferably added, in pure form or in the form of a solution, from the beginning of the formation of the solution according to step a) until adding it to the washing liquid, mostly toluene. It is in particular preferred to add the phosphorous compound to the washing liquid.

The addition amount of the phosphorous compound is typically selected so that a molar ratio of Group 2 metal and phosphorous is within the range of 0.05 to 1, preferably 0.1 to 0.5, more preferably 0.1 to 0.3, and most preferably 0.15 to 0.25, such as about 0.2.

It has been found, that the amount of the final P content in the procatalyst is very small, and below the detection limit. However, in some embodiments small amounts of P can be detected in the final procatalyst, and the amount of P may be 0.8 wt.-% or less, preferably 0.6 wt.-% or less, more preferably 0.4 wt.-% or less.

The phosphorous compound to be used in accordance with the present invention typically is a compound comprising phosphorous in the oxidation state of +5 or +3, preferably +5. Suitable examples of phosphorous compounds of the oxidation state of phosphorous of +3 are phosphines, such as tri-alkyl or tri-aryl phosphines, such as tri-phenyl phosphine. Preferred however are, as indicated above, phosphorous compounds comprising phosphorous in the oxidation state +5. Particular examples thereof are compounds of the formula $O=P(R)_3$ wherein the three residues R may be identical or different and may be selected among halogens, including Cl, Br, and I, preferably Cl, alkyls, alkenyls, aryls, phenyls with 1 to 20 C-atoms, preferably 1 to 16, more preferably 1 to 12 C-atoms, wherein the groups optionally may be substituted once or twice, preferably with any of the groups identified above. Still more preferably R are alkyls with 1 to 16 C-atoms, preferably 1 to 12, more preferably 1 to 8 C-atoms or Cl, and a particular example is $O=PCl_3$ which may be suitably used in particular when wishing to add the phosphorous compound already in step

a) or b). Another group of particular examples thereof are compounds of the formula $O=P(OR)_3$ wherein the three residues R may be identical or different and may be selected among alkyls, alkenyls, aryls, phenyls with 1 to 20 C-atoms, preferably 1 to 16, more preferably 1 to 12 C-atoms, wherein the groups optionally may be substituted once or twice, preferably with any of the groups identified above and halogens, including Cl, Br, and I. Still more preferably R are alkyls with 1 to 16 C-atoms, preferably 1 to 12, more preferably 1 to 8 C-atoms, and Alkyls with 2 to 6 C-atoms are especially useful, such as tributyl phosphate.

The aluminium alkyl or alkoxy compound, the magnesium compound and the phosphorous compound can be used alone or in combination.

The optional Al, Mg or P compound or a mixture thereof is preferably added before step e), more preferably during the washing step d), which comprises at least one, preferably two and more preferably three washing procedures with the same or preferably different hydrocarbons as washing medium.
The aluminium alkyl or alkoxy compound, magnesium compound and/ or the phosphorous compound to be used in the procatalyst preparation of the invention can be added to any of the washing mediums, which are, as described above, preferably toluene, heptane and/or pentane.

Though the procatalyst preparation can be carried out batch-wise, it is also preferable and possible to prepare the procatalyst semi-continuously or continuously. In such semi-continuous or continuous process, the solution of the magnesium complex, which is prepared according to the invention, is mixed with at least one compound of a transition metal, which might be solved in the same or different organic liquid reaction medium. The so obtained solution is then agitated, possibly in the presence of an emulsion stabilizer, and then the so-agitated emulsion is fed into a temperature gradient reactor, in which the emulsion is subjected a temperature gradient, thus leading to solidifying the droplets of a dispersed phase of the emulsion. The optional TMA is preferably contained in the solution of the complex or added to the solution before feeding the agitated solution to the temperature gradient reactor.

When feeding said agitated emulsion to the temperature gradient reactor, an inert solvent, in which the droplets are not soluble, can additionally be fed into that gradient reactor in order to improve the droplet formation and thus leading to a uniform grain size of the particles of the procatalyst, which are formed in the temperature gradient reactor when passing through said line. Such additional solvent might be the same as the organic liquid reaction medium, which is used for preparing the solution of the magnesium complex as explained above in more detail.

The solidified particles of the olefin polymerization procatalyst can subsequently be recovered by an in-stream filtering unit and then, optionally after some additional washing and drying steps in order to remove unreacted starting components, can be stored for further use. In one embodiment the procatalyst can be fed after washing steps into the olefin polymerization reactor, so that a continuous preparation and feed to the reactor is guaranteed. It is also possible to mix the solidified and washed procatalyst with an oily fluidic liquid and store and use the procatalyst as procatalyst-oil slurry. In this way the drying steps can be avoided, which might be sometimes detrimental to the procatalysts morphology. This oil-slurry method is described in general in EP-A-1489110 of the applicant, incorporated herein by reference.

As it can be seen from the above description of the semi-continuous or continuous process, it is thus possible to use separated reaction vessels for the different process steps and to transfer the reaction products which are prepared in the respective reaction vessels and to feed them in-line into further reaction vessels for formation of the emulsion and, subsequently, of the solidified particles.

It is preferred to use a full-continuous process as the time saving in said process is remarkable. In such fully continuous process, the formation of the solidified particles could be carried out in the temperature gradient line in the kind of pipe reactor, which is sufficiently long and which is subjected said temperature gradient from the starting temperature in the lower range of 20 to 80°C up to a "solidifying" temperature of 70 to 150°C. The temperature gradient is preferably obtained by means of heating the pipe reactor from the outside by applying normal heaters, microwaves, etc.

As mentioned before, a filtering unit might preferably be used for filtering the solidified particles from the solvent stream. For said filtering unit, various drums and sieving systems can be used, depending on the specific particle sizes.

As it is common knowledge, all steps have to be performed under an inert (oxygen and moisture free) atmosphere, which usually is a nitrogen atmosphere.

The present invention further comprehends an olefin polymerization catalyst comprising a procatalyst prepared as aforesaid, in association with an alkyl aluminium cocatalyst and optionally external donors, typically silane based donors, and the use of that polymerization catalyst for the polymerization of $C_2$ to $C_{10}$-olefins.

The present invention also provides a process for polymerizing olefins. Preferably the olefins to be polymerized are olefins with 2 to 10 carbon atoms, in particular ethylene and/or propylene and most preferably propylene. Due to the use of the procatalyst in accordance with the present invention it is possible to control the XS to low values, such as below 3 wt.-%, preferably below 2.5 wt.-%, and even below 2 wt.-%. XS values being even below 1.5 wt.-% are exemplified.

The procatalysts of the invention are preferably used in polymerization of propylene optionally with comonomers selected from ethylene and/or other alpha-olefins of 4 to 10 carbon atoms. All generally known polymerization processes including solution, slurry and gas phase polymerization or any combinations thereof for producing polymer compositions can be used.

Slurry polymerization is preferably a bulk polymerization, where monomer is used as a reaction medium.

Polymerization can be carried out in a single or a multistage polymerization process. Preferably polymerization is carried out in a multistage process using one or more polymerization reactors, which may be the same or different, e.g. slurry and/or gas phase reactors or any combinations thereof. Each stage may be effected in parallel or sequentially using same or different polymerization method. In case of a sequential stages each components may be produced in any order by carrying out the polymerization in each step, except the first step, in the presence of the polymer component formed in the preceding step(s).

In a preferred process at least one component is produced by slurry process, preferably in bulk reactor. Bulk reactor is preferably a loop reactor. In one preferred multistage process a combination of at least one slurry reactor and at least one gas phase reactor is used. Additional gas phase reactors are possible.

A preferred multistage process is a "loop-gas phase"-process, such as developed by Borealis (known as BORSTAR® technology) described e.g. in patent literature, such as in EP-A-0 887 379.

Optionally, the process can further comprise a pre-polymerization step before the actual polymerization step.

A continuous polymerization process is preferred.

Preferably, the process is a multi(two)stage process as defined above, wherein the slurry polymerization is preferably carried out under the following conditions in a loop reactor:

- the temperature is within the range of 60°C and 110°C, preferably in the range of 70-90 °C, and in some special cases at 80 °C or above.
- the pressure is within the range of 20 bar to 80 bar, preferably between 30 bar to 60 bar,
- hydrogen can be added for controlling the molar mass in a manner known per se;

The reaction mixture from the slurry (bulk) reactor is transferred to the gas phase reactor, such as a fluidized bed reactor, where the conditions are preferably as follows:

- the temperature is within the range of 60°C to 130°C, preferably between 70°C and 100°C, and in some special cases at 80 °C or above.
- the pressure is within the range of 5 bar to 50 bar, preferably between 15 bar to 35 bar,
- hydrogen can be added for controlling the molar mass in a manner known per se.

The average residence time can vary being e.g. in loop is in the range 0.5 to 5 hours, and in gas phase reactor 1 to 8 hours.

If desired, in slurry step supercritical conditions can be used.

The gas phase polymerization may be conducted in a manner known in the art, such as in a fluidized bed or in an agitated bed. Also fast fluidization may be utilized.

A catalyst system used in the polymerization can comprise in addition to the procatalyst of the present invention any well known external donors, such as silane based external donors, and cocatalysts, such as aluminium alkyl cocatalysts.

Some preferred embodiments of the invention are described, by way of illustration, in the following examples.

**METHODS:**

In the examples the following measuring methods were used:

The **melt flow rates** were measured with a load of 2.16 kg and at 230°C. The melt flow rate ($MFR_2$) is that quantity of polymer in grams which the test apparatus standardized to ISO 1133 extrudes within 10 minutes at a temperature of 230°C under a weight of 2.16 kg.

Determination of **Xylene Soluble Fraction** of product at 25°C. **(XS)**

The xylene soluble fraction (XS) as defined and described in the present invention was determined as follows: 2.0 g of the polymer are dissolved in 250 ml p-xylene at 135 °C under agitation. After 30 minutes, the solution was allowed to cool for 15 minutes at ambient temperature and then allowed to settle for 30 minutes at 25 $\pm$ 0.5 °C. The solution was filtered with filter paper into two 100 ml flasks. The solution from the first 100 ml vessel was evaporated in nitrogen flow and the residue dried under vacuum at 90 °C until constant weight is reached. The xylene soluble fraction (percent) can then be determined as follows:

$$XS\% = (100 \times m_1 \times v_0)/(m_0 \times v_1),$$

wherein $m_0$ designates the initial polymer amount (grams), $m_1$ defines the weight of residue (grams), $v_0$ defines the initial volume of solvent taken (250 millilitres) and $v_1$ defines the volume of the aliquot taken for determination (analysed sample; 100 millilitres).

**Molecular weights, molecular weight distribution (Mn, Mw, MWD) - GPC**

Molecular weight averages (Mw, Mn), Molecular weight distribution (MWD) and its broadness, described by polydispersity index, PDI= Mw/Mn (wherein Mn is the number average molecular weight and Mw is the weight average molecular weight) were determined by Gel Permeation Chromatography (GPC) according to ISO 16014-4:2003 and ASTM D 6474-99. A Waters GPC2000 instrument, equipped with heated flow cell (at 140 °C) connected via a heated transfer line (at 140 °C) was used with 2 x Olexis and 1x Olexis Guard columns from Polymer Laboratories and 1,2,4-trichlorobenzene (TCB) as solvent at 140 °C and at a constant flow rate of 1 mL/min. The heated flow cell is mounted on a sample plate located in a Perkin Elmer Spectrum 100 equipped with a MCT detector. The MCT detector is cooled with liquid nitrogen. During the chromatographic run a series of FTIR spectra is collected using the Perkin Elmer TimeBase V3.0 software. The spectrometer settings were 16 accumulations, scan range from 3000 cm-1 to 2700 cm-1, resolution 8 cm-1. A background spectrum taken under GPC run conditions is substracted from each spectrum collected during the chromatographic run. 423.5 $\mu$L of sample solution were injected per analysis. The column set was calibrated using universal calibration (according to ISO 16014-2:2003) with at least 15 narrow MWD polystyrene (PS) standards in the range of 0.6 kg/mol to 6 000 kg/mol. Mark Houwink constants for PS, PE and PP used are as per ASTM D 6474-99. All samples were prepared by dissolving 4.0 - 8.0 mg of polymer in 4 mL (at 140 °C) of stabilized TCB (stabilized with 250 mg/L 2,6-Di tert butyl-4-methyl-phenol) and keeping for max. 3 hours at max 160°C with continuously gentle shaking prior sampling into the GPC instrument. The spectral data as recorded by Perkin Elmer TimeBase 3.0 software is imported into Polymer Laboratories Cirrus V3.1 software and the evaluation towards molecular weights and molecular weight distribution was performed with this software.

**Ti and Mg amounts** in procatalysts (Comparative Example 2) were measured by flame atomic absorption method. Samples of the procatalysts were dissolved in a mixture of nitric and hydrofluoric acid and the metals were measured by flame atomic absorption with a nitrous oxide/acetylene flame.

**Ti and Mg amounts** in procatalysts (Example 2) were measured with IPC:

The elemental analysis of the procatalysts of Example 2 was performed by taking a solid sample of mass, M, cooling over dry ice. Samples were diluted up to a known volume, Vol, by dissolving in nitric acid ($HNO_3$ 65 %, 5 % of Vol) and freshly deionised (DI) water (95 % of Vol), the samples were left to stabilise for two hours.
The analysis was run at room temperature using a Thermo Elemental IRIS Advantage XUV Inductively Coupled Plasma - Atomic Excitation Spectrometer (ICP-AES) which was calibrated immediately before analysis using a blank (a solution of 5 % $HNO_3$ in DI water), a high standard (100 ppm Mg, 50 ppm Ti in a solution of 5 % $HNO_3$ in DI water) and a quality control sample (50 ppm Mg, 20 ppm Ti in a solution of 5 % $HNO_3$ in DI water).
The magnesium concentration was monitored via the 285.213 nm line and the titanium content via the 323.452 nm line.
The reported values, required to be between 0 and 100, or further dilution is required, are an average of three successive aliquots taken from the same sample and are related back to the original procatalyst using equation 1.

$$C = (R \times Vol)/M \hspace{4cm} \text{Equation 1}$$

Where: C is the concentration in ppm, related to % content by a factor of 10,000

R is the reported value from the ICP-AES
Vol is the total volume of dilution in ml
M is the original mass of sample in g

If dilution was required then this also needs to be taken into account by multiplication of C by the dilution factor.

**Determination of phthalic ester (dioctyl phthalate: DOP) amount:**

The determination of the phatalic esters (DOP) was done by first dissolving the sample in acetone. The dissolution was facilitated by keeping the acetone slurry in an ultra-sound bath for 5 minutes. After this the sample was filtered and run by solution chromatography. The component was identified by comparing the-respective retention time and UV spectra with standard conditions.

**EXAMPLE 1: Mg complex preparation according to the invention**

20.7 ml of 2-ethyl hexanol were placed in a 300 ml glass reactor at room temperature under inert gas conditions (Nitrogen). 58.5 ml of a 20 wt% solution of BOMAG in toluene was then added. At the beginning of the addition the temperature of the reactions mixture was increasing to 70°C. After this temperature was reached the reaction temperature was kept at this level by adjusting the addition rate of the Mg alkyl and cooling. Altogether, the addition of the Mg alkyl took 14 minutes.
After the addition is finalized, the mixture was stirred for 1 minute at 70°C, followed by the addition of 3.40 ml of phthaloyl dichloride. After 5 minutes stirring at 70°C the temperature of the reaction mixture was decreased to room temperature.

**EXAMPLE 2: Preparation of a Ziegler-Natta procatalyst**

19.5 ml titanium tetrachloride was placed in a 300 ml glass reactor equipped with a mechanical stirrer. Mixing speed was adjusted to 170 rpm. 32.0 g of the Mg-complex prepared according to Example 1 were then added to the stirred reaction mixture over a 10-minute period. During the addition of the Mg-complex the reactor contents were maintained below 30°C. 1.0 ml of a solution in toluene of 3.0 mg polydecene and 2.0 ml Viscoplex 1-254 were then added, and after 5 minutes stirring at room temperature 10.0 ml of n-heptane was added. Stirring was maintained at room temperature for 30 minutes. The temperature of the reaction mixture was then slowly raised to 90°C over a period of 20 minutes and held at that level for 30 minutes with stirring. After settling and syphoning the solids underwent washing with 100 ml toluene at 90°C for 30 minutes, 60 ml heptane for 20 minutes at 90°C and 60 ml pentane for 10 minutes at 25°C. Finally, the solids were dried at 60 °C by nitrogen purge, to yield a yellow, air-sensitive powder.
The procatalyst composition can be seen in Table 1.

**EXAMPLE 3: Polymerization**

**A propylene bulk polymerization was carried out in a stirred 5 l tank reactor. About 0.9 ml** triethyl aluminium (TEA) as a co-catalyst, ca 0.12 ml cyclohexylmethyl dimethoxysilane (CMMS) as an external donor and 30 ml n-pentane were mixed and allowed to react for 5 minutes. Half of the mixture was then added to the polymerization reactor and the other half was mixed with about 20 mg of a procatalyst of example 1. After additional 5 minutes the procatalyst/TEA/donor/n-pentane mixture was added to the reactor. The Al/Ti mole ratio was 250 mol/mol and the Al/CMMS mole ratio was 10 mol/mol. 70 mmol hydrogen and 1400 g propylene were introduced into the reactor and the temperature was raised within ca 15 minutes to the polymerization temperature of 80°C. The polymerization time after reaching polymerization temperature was 60 minutes, after which the polymer formed was taken out from the reactor.

Polymerization results are disclosed in Table 2.

**COMPARATIVE EXAMPLE 1: Preparation of Mg-complex**

20.7 ml of 2-ethyl-1-hexanol were placed in a 300 ml glass reactor at room temperature under inert gas conditions (Nitrogen). 58.5 ml of a 20 wt% solution of BOMAG in toluene was then added. The reaction temperature was kept below 30°C during the addition by adjusting the addition rate of the Mg alkyl and additional cooling. Altogether, the addition of the Mg alkyl took 27 minutes.

The reaction mixture was then heated to 60°C during a period of 17 minutes, and mixing was maintained at this temperature for another 60 minutes.

3.40 ml of phthaloyl dichloride are then added during 12 minutes, and the mixture is stirred for 60 minutes at 60°C.

After cooling to room temperature the Mg-complex is obtained in form of a slightly yellowish liquid.

**COMPARATIVE EXAMPLE 2: Preparation of a Ziegler-Natta procatalyst**

Example 2 was repeated, with the exception that now the magnesium complex prepared according to Comparative Example 1 was used.

The procatalyst composition can be seen in Table 1.

**COMPARATIVE EXAMPLE 3: Polymerization**

Example 3 was repeated, with the exception that now the procatalyst prepared according to Comparative Example 2 was used.

Polymerization results are disclosed in Table 2

**Table 1:** Procatalyst compositions:

| Procatalyst | Ti [wt%] | Mg [wt%] | DOP [wt%] |
|---|---|---|---|
| Example 2 | 3,41 | 13,5 | 30,1 |
| CE 2 | 3,4 | 12,6 | 29,3 |

CE……Comparative Example

**Table 2:** Polymerization results:

| Procatalyst | Activity (70°C) [kg PP/g cat * 1h] | MFR [g/10 min] | XS [wt%] |
|---|---|---|---|
| Example 2 | 40.7 | 3.6 | 1.3 |
| CE 2 | 36,5 | 4.0 | 1.6 |

From Table 2 it can be seen that the preparation of the magnesium complex according to the invention has, in addition to short production times, further advantages, like increased activity.

The polymers produced show furthermore a decreased XS amount.

**Claims**

1. Process for preparing a magnesium complex, said process comprises

   a)adding a solution of a dialkyl magnesium compound of the formula $R_2Mg$, wherein each one of the two Rs is a similar or different $C_1$-$C_{20}$-alkyl, in a $C_6$-$C_{10}$ aromatic hydrocarbon to a monohydric alcohol of the formula R'OH, wherein R' is a $C_1$-$C_{20}$-alkyl at a temperature of 60 to 90°C and after reaction in step a) is completed
   b)adding an aromatic carboxylic acid chloride or diacid dichloride as donor precursor at the same temperature as used in step a) and after reaction in step b) is completed
   c) cooling the reaction mixture down to a temperature of 15 to 30°C yielding the magnesium complex as liquid.

2. Process according to claim 1, wherein in step a) butyl octyl magnesium or butyl ethyl magnesium is used as dialkyl magnesium compound and toluene is used as aromatic hydrocarbon in a molar ratio of said aromatic hydrocarbon to magnesium of less than 10.

3. Process according to claim 1 or 2, wherein the monohydric alcohol used in step a) is 2-ethyl-1-hexanol and wherein the molar ratio of said alcohol to magnesium is in the range of alcohol/Mg = 2 to alcohol/Mg = 3.

4. Process according to any of preceding claims 1 to 3, wherein phthaloyl dichloride is used as donor precursor and wherein the molar ratio of said precursor to magnesium is in the range of precursor/Mg = 0.1 to precursor/Mg = 0.8.

5. Use of a magnesium complex prepared according to claims 1 to 4 for the preparation of a Ziegler-Natta procatalyst by emulsion/solidification technology.

6. Process for the preparation of Ziegler-Natta procatalysts by emulsion/solidification technology, said process comprises

   a) adding a magnesium complex solution prepared according to claim 1 to 4 to at least one compound of a transition metal to produce an emulsion, wherein the dispersed phase of which is in the form of droplets and contains more than 50 mol% of the magnesium in said complex,
   b) agitating the emulsion in order to maintain the droplets of said dispersed phase within a predetermined average size range,
   c) solidifying said droplets of the dispersed phase,
   d) washing the solidified particles at least once,
   e) drying the solidified particles or slurring the solidified particles to an oily liquid without drying and optionally
   f) recovering the dried or slurried solidified particles of the olefin polymerization procatalyst.

7. Process according to claim 6, wherein during the procatalyst preparation optionally an aluminium compound having a general formula $AlR_{3-n}X_n$, wherein R stands for a straight chain or branched alkyl or alkoxy group having 1 to 20, with at least one R being an alkyl group, X independently represents a residue selected from the group of halogen, and n stands for 0, 1 or 2, and/or a magnesium compound of the general formula $MgR_{2-n}X_n$, where each n is 0 or 1, and each R are same or different alkyl groups with 1 to 8 carbon atoms and X is halogen, and/or a phosphorous compound comprising phosphorous in the oxidation state +3 or +5 of the formula $O=P(OR)_3$, wherein the three residues R may be identical or different and may be selected among alkyls, alkenyls, aryls, phenyls with 1 to 20 C-atoms, wherein the groups optionally may be substituted once or twice, is added at any stage before drying or slurring the solidified particles in step f).

8. The process according to claim 6 or 7 wherein said magnesium complex and said transition metal compound are reacted at a temperature of 10° to 60°C in step b) and said transition metal compound is a Group 4 metal compound.

9. A process according to any of the preceding claims 6 to 8 wherein said emulsion of step b) is composed of a first dispersed phase which is a toluene/ Group 4 metal compound - insoluble-oil having a Group 4 metal/Mg mol ratio greater than 0.1 and less than 10 and a second disperse phase which is an oil less dense than that of the dispersed phase and which has a Group 4 metal/Mg mol ratio of 10 to 100.

10. A process according to any of claims 6 to 9 wherein in step c), the emulsion is agitated in the presence of an emulsion stabilizer and/or a turbulence minimizing agent, said emulsion stabilizer is a surfactant, which comprises an acrylic polymer and/or methacrylic polymer and said turbulence minimizing agent is selected from polymers of octene, nonene, decene, undecene, dodecene, copolymers or mixtures of polymers thereof.

11. Particles of the procatalyst obtainable according to any of claims 6 to 10.

12. An olefin polymerization catalyst system comprising particles of the procatalyst obtainable according to the process of any of claims 6 to 10, a cocatalyst, preferably an alkylaluminium cocatalyst and optionally an external electron donor.

13. Use of a catalyst system in accordance with claim 12 in a process for polymerizing $C_2$ to $C_{10}$ $\alpha$-olefins for producing homo- or copolymers thereof.

14. Use according to claim 13 for preparing a polymer having a XS below 3wt%, preferably below 2.5wt%, more preferably below 2.0wt% and most preferably below 1.5wt%.

15. Polymer prepared using the olefin polymerization catalyst system according to claim 12, wherein the polymer is a polymer comprising repeating units derived from $C_2$ to $C_{10}$ $\alpha$-olefins, preferably propylene or ethylene or copolymers thereof with other $C_2$ to $C_{10}$ $\alpha$-olefins and wherein the polymer has a XS below 3wt%, preferably below 2.5wt%, more preferably below 2.0wt% and most preferably below 1.5wt%.

Europäisches
Patentamt

European
Patent Office

Office européen
des brevets

## EUROPEAN SEARCH REPORT

Application Number

EP 09 15 4070

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| D,X | EP 1 403 292 A (BOREALIS POLYMERS OY [FI]) 31 March 2004 (2004-03-31) * paragraphs [0082], [0034], [0038] * * page 8 * ----- | 1-15 | INV. C07F3/00 C08F4/00 |
| D,X | WO 03/000757 A (BOREALIS POLYMERS OY [FI]; DENIFL PETER [AT]; LEINONEN TIMO [FI]) 3 January 2003 (2003-01-03) * the whole document * * claim 1 * ----- | 1-15 | |
| D,X | EP 1 862 481 A (BOREALIS TECH OY [FI]) 5 December 2007 (2007-12-05) * the whole document * * paragraphs [0098] - [0101] * * claims 1-33 * ----- | 1-15 | |
| | | | TECHNICAL FIELDS SEARCHED (IPC) |
| | | | C07F C08F |

The present search report has been drawn up for all claims

| Place of search | Date of completion of the search | Examiner |
|---|---|---|
| Munich | 6 July 2009 | Bader, Karl Günther |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 09 15 4070

This annex lists the patent family members relating to the patent documents cited in the above-mentioned European search report.
The members are as contained in the European Patent Office EDP file on
The European Patent Office is in no way liable for these particulars which are merely given for the purpose of information.

06-07-2009

| Patent document cited in search report | | Publication date | Patent family member(s) | | Publication date |
|---|---|---|---|---|---|
| EP 1403292 | A | 31-03-2004 | AU | 2003276012 A1 | 19-04-2004 |
| | | | BR | 0314812 A | 02-08-2005 |
| | | | CN | 1701081 A | 23-11-2005 |
| | | | WO | 2004029112 A1 | 08-04-2004 |
| | | | JP | 2006501325 T | 12-01-2006 |
| | | | US | 2006166814 A1 | 27-07-2006 |
| WO 03000757 | A | 03-01-2003 | AT | 328912 T | 15-06-2006 |
| | | | BR | 0210400 A | 17-08-2004 |
| | | | BR | 0210403 A | 17-08-2004 |
| | | | CA | 2447592 A1 | 03-01-2003 |
| | | | CA | 2447644 A1 | 03-01-2003 |
| | | | CN | 1518563 A | 04-08-2004 |
| | | | CN | 1537118 A | 13-10-2004 |
| | | | CN | 1518565 A | 04-08-2004 |
| | | | DE | 60120389 T2 | 14-06-2007 |
| | | | WO | 03000754 A1 | 03-01-2003 |
| | | | WO | 03000755 A2 | 03-01-2003 |
| | | | EP | 1273595 A1 | 08-01-2003 |
| | | | ES | 2266053 T3 | 01-03-2007 |
| | | | HU | 0400335 A2 | 28-07-2004 |
| | | | JP | 2004530765 T | 07-10-2004 |
| | | | PL | 366583 A1 | 07-02-2005 |
| | | | PT | 1273595 E | 31-10-2006 |
| | | | US | 2004235644 A1 | 25-11-2004 |
| | | | US | 2004242406 A1 | 02-12-2004 |
| | | | US | 2004242407 A1 | 02-12-2004 |
| EP 1862481 | A | 05-12-2007 | CN | 101460529 A | 17-06-2009 |
| | | | WO | 2007137853 A1 | 06-12-2007 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 03000757 A
- WO 03000754 A
- WO 2004029112 A
- EP 1862480 A
- EP 1862481 A
- EP 1489110 A
- EP 0887379 A